Europäisches Patentamt

European Patent Office

Office européen des brevets

(11) Veröffentlichungsnummer: **0 392 215**

**A1**

## (12) EUROPÄISCHE PATENTANMELDUNG

(21) Anmeldenummer: **90105055.9**

(22) Anmeldetag: **17.03.90**

(51) Int. Cl.5: **A61C 13/265, F16B 37/04**

(30) Priorität: **14.04.89 DE 3912364**

(43) Veröffentlichungstag der Anmeldung:
**17.10.90 Patentblatt 90/42**

(84) Benannte Vertragsstaaten:
**DK ES FR GB GR IT NL SE**

(71) Anmelder: **Nova-Pro Attachment GmbH**
**Reingsen 25**
**D-5840 Schwerte(DE)**

(72) Erfinder: **Brügmann, Dirk A.**
**Reingsen 34**
**D-5840 Schwerte(DE)**

(74) Vertreter: **Hassler, Werner, Dr.**
**Postfach 17 04 Asenberg 62**
**D-5880 Lüdenscheid(DE)**

(54) **Gewindemutter und deren Aufnahme in einem Zahnprothesengerüst.**

(57) Eine Gewindemutter zur Halterung eines Gewindeankers. Das technische Problem ist die Ermöglichung einer einfachen Einlage der Gewindemutter in das Zahnprothesengerüst. Die Mutter (8) weist an einem Stirnbereich einen Umfangswulst (10) und mindestens einen von der Rückseite (11) ausgehenden axialen Schlitz (12) auf und besteht aus einem nachgiebigen Werkstoff.

Fig.1

Die Erfindung betrifft eine Gewindemutter zur Halterung eines Gewindeankers.

Eine derartige Gewindemutter dient zur Halterung des Gewindefußes einer Druckknopfpatrize. Eine derartige Gewindemutter ist aus der DE-PS 36 20 590 bekannt. Die Gewindemutter mit konischer Außenfläche wird in eine vorbereitete Aufnahme des Zahnprothesengerüsts von der Rückseite eingelegt. Einerseits ist die genaue Anpassung der Aufnahme sehr aufwendig. Andererseits ist eine solche Gewindemutter nur dort einsetzbar, wo das Zahnprothesengerüst auch auf der Rückseite einen Zugang zu der Aufnahme bietet.

Aufgabe der Erfindung ist die Ermöglichung einer einfachen Einlage der Gewindemutter in das Zahnprothesengerüst.

Diese Aufgabe wird nach der Erfindung dadurch gelöst, daß die Mutter an einem Stirnbereich einen Umfangswulst und mindestens einen von der Rückseite ausgehenden axialen Schlitz aufweist und daß die Mutter aus einem nachgiebigen Werkstoff besteht.

Die Erfindung unterscheidet sich insofern vom Stand der Technik, als die Gewindemutter unter Verformung in die Aufnahme eindrückbar ist. Die Gewindemutter kann in eine einseitig offene Kammer eingedrückt werden. Soweit die Gewindemutter nach dem Eindrücken nicht selbsttätig und vollständig die Ausgangslage wieder einnimmt, werden das Innengewinde der Gewindemutter und die Gewindemutter selbst beim Einschrauben des Gewindefußes wieder in die ursprüngliche Lage zurückgestellt, in der die Gewindemutter eine formschlüssige Aufnahme innerhalb der Kammer findet.

Ein leichtes Eindrücken der Gewindemutter wird dadurch sichergestellt, daß sich der axiale Schlitz etwa über die halbe axiale Länge der Mutter erstreckt.

Eine Formbeständigkeit der Gewindemutter wird dadurch gewährleistet, daß dieselbe aus einem zurückfedernden, formbeständigen Werkstoff besteht.

Eine Vorrichtung zur Aufnahme einer Gewindemutter in einem Zahnprothesengerüst ist dadurch gekennzeichnet, daß eine Aufnahmekammer einen stirnseitigen Innenwulst aufweist, dessen lichter Durchmesser dem Außendurchmesser der Mantelfläche der Mutter entspricht und dessen Hinterschneidungsabschnitt den Umfangswulst der Mutter aufnimmt.

Zur Verdrehsicherung der Gewindemutter ist vorgesehen, daß die Aufnahmekammer in der Fußfläche entsprechend den Axialschlitzen Rippen aufweist. Man kann jeweils eine Rippe und einen Axialschlitz in einer Radialebene vorsehen. Es sind auch mehrere über den Umfang verteilte Rippen und Axialschlitze möglich.

Zur definierten Anlage und Fixierung des Druckknopfankers ist vorgesehen, daß die Hinterschneidungsfläche des Innenwulstes und der Umfangswulst so geformt sind, daß die freie Stirnfläche der Gewindemutter gegenüber der Stirnfläche der Aufnhamekammer zurückgesetzt ist.

Eine Ausführungsform der Erfindung wird im folgenden unter Bezugnahme auf die anliegenden Zeichnungen erläutert, in denen darstellen:

Fig. 1 eine Aufnahmekammer in dem Zahnprothesengerüst mit der geschnittenen Darstellung einer Gewindemutter,

Fig. 2 die Gewindemutter beim Eindrückvorgang,

Fig. 3 die Gewindemutter innerhalb der Aufnahmekammer und

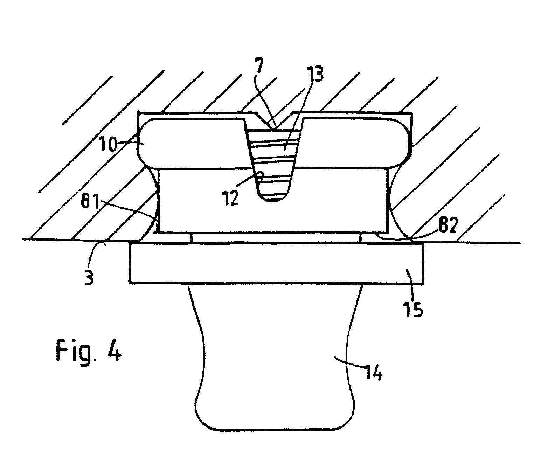

Fig. 4 die Passung der Teile nach dem Einschrauben einer Druckknopfpatrize.

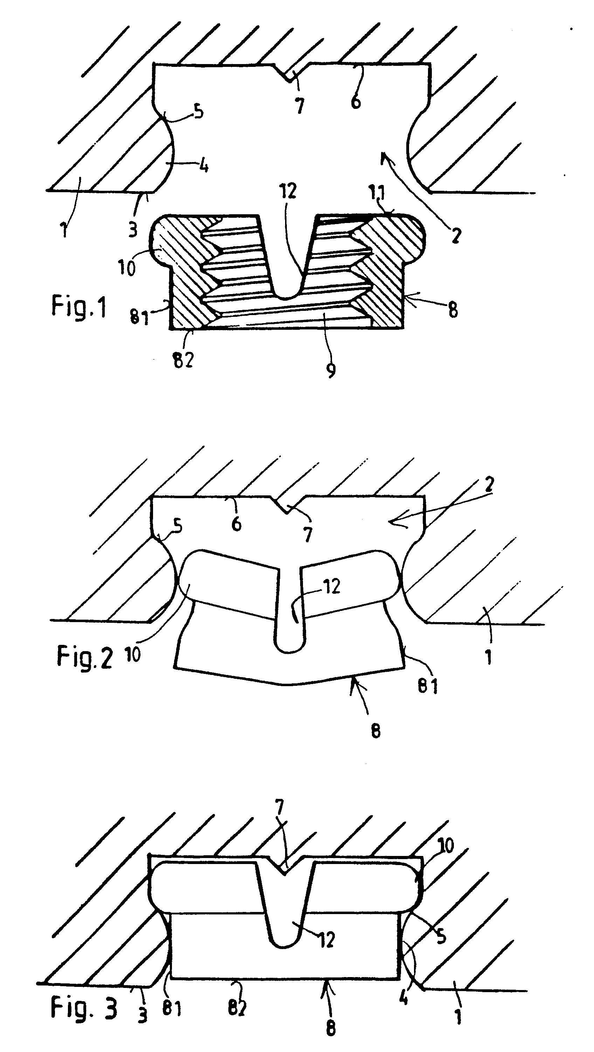

Fig. 1 zeigt einen Teil eines Zahnprothesengerüstes 1, das in üblicher Weise ein Gußteil ist. Innerhalb des Zahnprothesengerüstes 1 ist eine Aufnahmekammer 2 geformt, die in üblicher Weise durch eine Platzhaltervorrichtung beim Modellieren erzeugt ist. Die Auufnahmekammer 2 hat einen kreisförmigen Querschnitt und weist im Anschluß an die Stirnfläche 3 einen Innenwulst 4 mit einem ringförmigen Profil und einer Hinterschneidungsfläche 5 auf. Innerhalb der Fußfläche 6 ist radial durch das Zentrum der Fußfläche 6 eine Rippe 7 mit keilförmigem Profil ausgebildet.

Ferner ist eine Gewindemutter 8 mit einem Innengewinde 9, einer zylindrischen Mantelfläche 81 und einem Umfangswulst 10 vorgesehen. Der Umfangswulst 10 hat ein ringförmiges Profil und liegt der vorderen Stirnfläche 82 gegenüber. Von der Rückseite 11 geht ein axialer Schlitz 12 aus. Die Gewindemutter 8 ist so bemessen, daß die Mantelfläche 81 in dem Innenwulst 4 Platz findet. Der Umfangswulst 10 legt sich an das Profil der Hinterschneidungsfläche 5 an. Der Axialschlitz 12 korrespondiert mit der Rippe 7, die als Verdrehschutz für die Gewindemutter 8 dient.

Die Gewindemutter 8 besteht aus einem nachgiebigen Werkstoff. Zweckmäßigerweise handelt es sich um einen formbeständigen und zurückfedernden Werkstoff. Die Gewindemutter wird in der aus Fig. 8 ersichtlichen Weise in die Aufnahmekammer 2 eingedrückt. Dabei wird die Einführungsseite der Gewindemutter 8 zusammengedrückt, was durch den Axialschlitz begünstigt wird.

Fig. 3 zeigt die Gewindemutter in eingesetztem Zustand innerhalb der Aufnahmekammer 2. Die Gewindemutter stellt sich in die Ausgangsform zurück. Der Umfangswulst 10 liegt unterhalb der Hinterschneidungsfläche 5. Sowohl gegenüber der Fußfläche 6 der Aufnahmekammer als auch gegenüber der durch die Stirnfläche 3 festgelegten Ebene bleibt ein Spalt frei.

In die in der Aufnahmekammer 2 sitzende Gewindemutter 8 wird ein Gewindefuß 13 eines Druckknopfankers 14 eingeschraubt. Der Druckknopfanker 14 hat auch einen Auflageteller 15. Beim Einschrauben wird das Innengewinde 9 der Gewindemutter 8 nachgeformt, wenn dieses beim Einpreßvorgang gemäß Fig. 2 verformt worden sein sollte. Die Gewindemutter wird beim Einschrauben des Gewindefußes vollständig in die Ausgangslage zurückgestellt. Die Rippe 7 verhindert ein Überdrehen oder Durchdrehen der Gewindemutter 8. In eingeschraubten Zustand liegt einerseits der Auflageteller 15 an der Stirnfläche 3 an. Andererseits stützt sich der Umfangswulst 10 an der Hinterschneidungsfläche 5 des Innenwulstes 4 ab. Dadurch ist ein sicheres Festspannen gewährleistet. Der Gewindefuß 13 liegt an der Rippe 7 nicht an.

Die Gewindemutter 8 ist bei einer Beschädigung oder einem Verschleiß jederzeit austauschbar. Die Gewindemutter 8 kann in eine rückseitig abgeschlossene Aufnahmekammer 2 eingesetzt werden. Dieses ist aus zahntechnischen Gründen außerordentlich vorteilhaft.

**Ansprüche**

1. Gewindemutter zur Halterung eines Gewindeankers, dadurch gekennzeichnet, daß die Mutter (8) an einem Stirnbereich einen Umfangswulst (10) und mindestens einen von der Rückseite (11) ausgehenden axialen Schlitz (12) aufweist und daß die Mutter (8) aus einem nachgiebigen Werkstoff besteht.

2. Gewindemutter nach Anspruch 1, dadurch gekennzeichnet, daß sich der axiale Schlitz (12) etwa über die halbe axiale Länge der Mutter (8) erstreckt.

3. Gewindemutter nach Anspruch 1 oder 2, dadurch gekennzeichnet, daß dieselbe aus einem zurückfedernden, formbeständigen Werkstoff besteht.

4. Vorrichtung zur Aufnahme einer Gewindemutter nach einem der Ansprüche 1 bis 3 in einem Zahnprothesengerüst, dadurch gekennzeichnet, daß eine Aufnahmekammer (2) einen stirnseitigen Innenwulst (4) aufweist, dessen lichter Durchmesser dem Außendurchmesser der Mantelfläche (81) der Mutter (8) entspricht und dessen Hinterschneidungsabschnitt (5) den Umfangswulst (10) der Mutter (8) aufnimmt.

5. Vorrichtung nach Anspruch 4, dadurch gekennzeichnet, daß die Aufnahmekammer (2) in der Fußfläche (6) entsprechend den Axialschlitzen (12) Rippen (7) aufweist.

6. Vorrichtung nach Anspruch 4 oder 5, dadurch gekennzeichnet, daß die Hinterschneidungsfläche (5) des Innenwulstes (4) und der Umfangswulst (10) so geformt sind, daß die freie Stirnfläche (82) der Gewindemutter (8) gegenüber der Stirnfläche (3) der Aufnahmekammer (2) zurückgesetzt ist.

Fig.1

Fig.2

Fig. 3

Fig. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | WO-A-7 900 847  (CENDRES ET METAUX S.A. et al.) <br> * Figuren 1,4; Seite 3, Zeilen 14-22; Seite 4, Zeile 28 - Seite 5, Zeile 6 * | 1-3 | A 61 C  13/265 <br> F 16 B  37/04 |
| A | --- | 4 | |
| A | SOVIET INVENTIONS ILLUSTRATED <br> Mech. Sekt., Woche 8650, Zusammenfassung Nr. 330588, Q 61, 24.12.1986, Derwent Publications Ltd., London, GB; & SU-A-1222917 (GODUNOV FE) 07.04.1986 <br> --- | 5 | |
| A | US-A-4 540 367  (J.M. SULC) <br> * Figuren 3,6 * <br> --- | 1,4 | |
| D,A | DE-C-3 620 590  (F. SPECKMANN) <br> * Figur 1 * <br> --- | 1,4 | |
| X | FR-A-1 599 187  (M. LANGENSIEPEN KG) <br> * Figuren 3-5; Seite 2, Zeilen 17-23 * <br> --- | 1-3 | RECHERCHIERTE SACHGEBIETE (Int. Cl.5) |
| A | FR-A-1 318 824  (M. AUDUBERT) <br> * Figuren 1,3,4 * <br> ----- | 1-3 | A 61 C <br> F 16 B |

Der vorliegende Recherchenbericht wurde für alle Patentansprüche erstellt

| Recherchenort | Abschlußdatum der Recherche | Prüfer |
|---|---|---|
| BERLIN | 28-06-1990 | KANAL P K |